# EUROPEAN PATENT APPLICATION

(11) **EP 2 216 666 A1**
(43) Date of publication of application: **11.08.2010**
(21) Application number: 09001665.0
(22) Date of filing: 06.02.2009
(51) Int. Cl.: G02B 6/44, H02G 1/08

(54) **Cable and method for manufacturing the same**

(71) Applicant: CCS Technology Inc., Wilmington, DE 19803 (US)
(72) Inventor: Mirynowska, Magdalena, 76200 Slupsk (PL); Kolodziej, Pawel, 20543 Lublin (PL)
(74) Representative: Sturm, Christoph

(57) **Abstract**

A cable (11) comprising a cable jacket (13) surrounding a plurality of data transmission elements, strength members (27) releasing the data transmission elements from mechanical stress during installation and/or operation of the cable, a pulling member (25) for pulling the cable through a cable duct during installation of the cable, whereby said pulling member (25) is an integral element of the cable and made of a loop of strength members protruding from the cable jacket and folded back thereto.

## Description

A cable, especially an optical cable, with a pulling member is described. Further on, methods for manufacturing the cable with a pulling member are described.

In the world of the ever-increasing need for broadband bandwidth optical cables have become the main part of telecommunication networks. Optical cables can transmit voice signals, data signals and video signals for very long distances with very high speed. Developments of optic telecommunication networks allow the connection of the end user directly to the optical fiber. This kind of network technology known as FTTH technology (fiber to the home) requires extending an "all optical" communication network closer to the subscribers. As a result such telecommunication networks include large number distribution points from a distribution cable to an end user or subscriber.

One of the key parts of the FTTH network is the last mile connection which often is an indoor installation. Different kind of buildings like multi dwelling units and block of flats require complicated cabling systems which might mean that there are many separated cables, each one to connect one subscriber. Installation of many cables which provide the connection between a main distribution point (which usually is located in the basement or in another place of the building) and the end user may cause many problems with routing through the wall or levels of the building. As a result, such installations consume a lot of time and costs. Another way to provide the connection between the main distribution point and the end user or subscriber is using an optical cable comprising a riser cable with branched off tether cables, whereby the riser cable is to be connected to the main distribution point via a distribution cable, and whereby the tether cables are to be connected to the end users via a drop cables.

During the installation of a cable it is necessary to pull the cable through a cable duct. It is already known from the prior art to use a pulling grip for pulling a cable through a cable duct during installation of the cable.

Such a pulling grip for tether cables is known from US 7,277,614 B2. The pulling grip disclosed in this prior art document is a separate device being temporary secured to the tether cable to be installed.

Similar pulling grips being separate devices are known for riser cables or other cables for indoor and outdoor applications. The use of such pulling grips being separate devices results in high costs for manufacturing and for installation.

Against this background, the a novel cable is provided being easy to manufacture and being easy to install in order to reduce costs for manufacturing and costs for installation. Further on, such cables are manufactured by novel methods of manufacture.

This problem is solved by a cable according to claim 1.

The cable according to claim 1 comprises a cable jacket surrounding a plurality of data transmission elements, especially a plurality of optical fibers; strength members releasing the data transmission elements from mechanical stress during installation and/or operation of the cable; a pulling member for pulling the cable through a cable duct during installation of the cable, wherein said pulling member being an integral element of the cable.

The pulling member is an integral element of the cable.

The use of pulling members being an integral element of the cable allows the reduction costs for manufacturing and costs for installation. ble, the strength members forming a loop thereby providing the pulling member, whereby both ends of the loop and a portion of the cable jacket to which at least one end section of the strength members is attached are preferably surrounded by a heat shrink member or a moulded plastic as for example by injection moulding or extrusion.

According to a preferred embodiment the strength members providing the pulling member are split up into at least three groups, whereby said groups of strength members are interweaved thereby forming a twisted pulling member.

The cable according to certain embodiments can be a copper cable, a fiber optic cable or a hybrid cable for indoor and outdoor applications. Most preferably, the cable is a preassembled optical cable, especially a preassembled indoor optical cable.

The method for manufacturing a cable comprising is defined in claim 10.

The method according claim 10 comprises at least the following steps: providing a cable comprising a cable jacket surrounding a plurality of data transmission elements and further comprising strength members releasing the data transmission elements from mechanical stress during installation and/or operation of the cable; removing the cable jacket at an end of said cable; forming a pulling member from the strength members of the cable thereby providing a pulling member being an integral element of the cable.

Preferred embodiments of the cable and its method for manufacturing are given in the dependent claims and the description below. Exemplary embodiments will be explained in more detail with reference to the drawing, in which:
- figure 1: shows a cable according to a preferred embodiment being a preassembled optical cable;

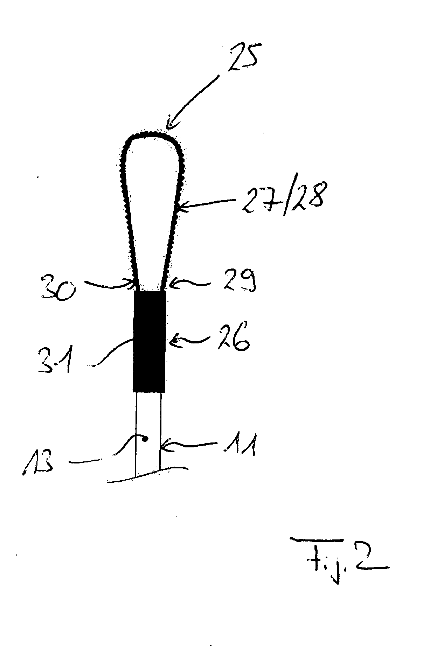

- figure 2: shows an end portion of the cable according to figure 1;
- figures 3a to 3g: illustrate a preferred method for manufacturing the cable;
- figure 4: shows the end portion according to figure 2 together with a ring; and
- figure 5: shows the end portion according to figure 2 together with a hook.

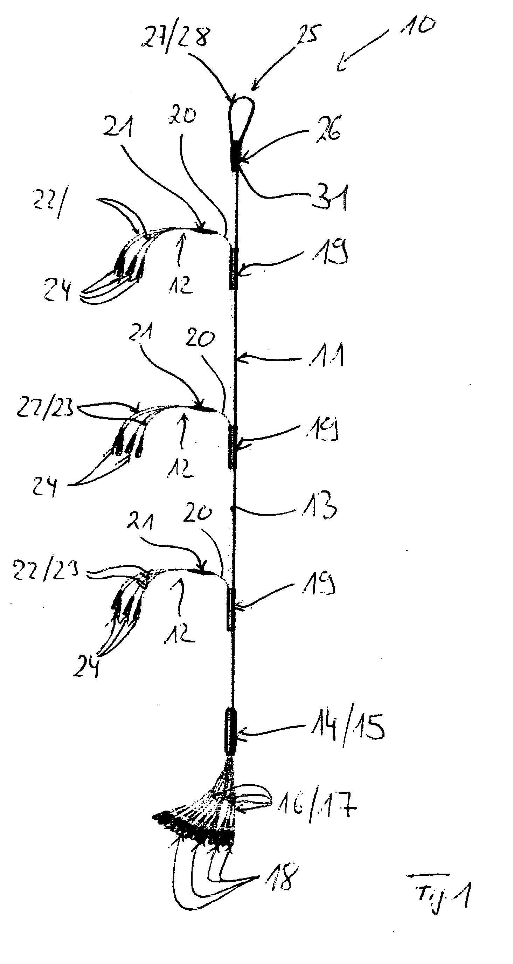

Figure 1 shows a schematic view of a preferred embodiment of a cable which is a preassembled optical cable 10. The preassembled optical cable 10 comprises a riser cable 11 and at least one tether cable 12 branched off from said riser cable 10. According to the embodiment of figure 1, the preassembled optical cable 10 comprises three tether cables 12.

The riser cable 11 comprises a cable jacket 13 surrounding a plurality of optical fiber bundles (not shown), wherein each of said optical fiber bundles comprises a buffer tube surrounding a plurality of individual optical fibers.

The riser cable 11 further comprises a furcation adapter 14 mounted to a first end 15 of said riser cable 11, said furcation adapter 15 splitting out the individual optical fibers 16 of said riser cable 11 in a way that each of said individual optical fibers 16 of said riser cable 11 is surrounded by an individual protection tube 17 and that each of said individual optical fibers 16 of said riser cable 11 can be connected to an optical fiber of a distribution cable.

The individual optical fibers 16 of said riser cable 11 are preferably connectorized with fiber optic connectors 18 in order to connect each of said individual optical fibers 16 of said riser cable 11 to an optical fiber of said distribution cable at a main distribution point.

The riser cable 11 further comprises mid span access locations 19, wherein in the region of at least one of these mid span access locations 19 at least one tether cable 12 is branched off from said riser cable 11.

According to the embodiment of figure 1, the preassembled optical cable 10 comprises three mid span access locations 19, whereby at each mid span access location 19 one tether cable 12 is branched off from said riser cable 11.

Each of said tether cables 12 of the preassembled optical cable 10 comprises one unspliced optical fiber bundle of said riser cable 11 surrounded by an protection tube 20.

A furcation adapter 21 is mounted to each tether cable 12, said furcation adapter 21 splitting out the individual optical fibers 22 of each tether cable 12 in a way that each of said individual optical fibers 22 of each tether cable 12 is surrounded by an individual protection 23 tube and that each of said individual optical fibers 22 of each tether cable 12 can be connected to an optical fiber of a drop cable.

The individual optical fibers 22 of each tether cable 12 are preferably connectorized with fiber optic connectors 24 in order to connect each of said individual optical fibers of each tether cable 12 to an optical fibers of a drop cable an thereby to subscribers or end users.

The riser cable 11 further comprises a pulling member 25 for pulling the riser cable 11 together with the tether cables 12 through a cable duct during installation. The pulling member 25 is assigned to a second end 26 of said riser cable 11. The pulling member 15 is an integral element of the cable, namely in the shown embodiment of the riser cable 11.

It is possible that an additional mid span access location 19 for branching off an additional tether cable 12 from said riser cable 11 is located in the region of the second end 26 of said riser cable 11.

The riser cable 11 further comprises a plurality of strength members 27 releasing the optical fibers of said riser cable 11 from mechanical stress during installation and/or operation of the riser cable 11.

The pulling member 25 is made from the strength members 27 of the riser cable 11 in a way that a loop 28 made from the strength members 27 of the riser cable 11 provides the pulling member 25.

In order to form the loop 28 from the strength members 27 of the riser cable 11 the cable jacket 13 and preferably the optical fibers of said riser cable 11 are cut at second end 26 of the riser cable 11.

After cutting the cable jacket 13 and preferably the optical fibers of said riser cable 11 the cut section cable jacket 13 and preferably the cut sections of the optical fibers are removed from the riser cable 11 thereby providing strength members 27 protruding from the cable jacket 13 and preferably protruding from the optical fibers of said riser cable 11. The free length of said strength members 27 protruding from the cable jacket 17 is formed to the loop 28 in order to provide the pulling member 25.

Alternatively or in addition, one or more of said strength members 27 can be connected to a piece of hardware (metal or plastic) that has a loop or eye formed in the hardware and then covered by the heat shrink or molded plastic materials.

The free length of said strength members 27 protruding from the cable jacket 13 is formed to the loop 28 in a way that a first end 29 of the loop 28 is formed by a middle section of the strength members 27, that a second end 30 of the loop 28 is formed by an end section of the strength members 27, and that the second end 30 of the loop 28 is attached to the cable jacket 13 by example given a glue.

Both ends 29, 30 of the loop 28 providing the pulling member 25 and a portion of the cable jacket 13 to which the second end 30 of the loop 28 or the second end 30 of the strength members 27 is attached are surrounded by a heat shrink element 31.

Said heat shrink element 31 secures precisely both ends 30 of the loop 28 or strength members 27 at the riser cable 11 to provide strong hold and smooth shape. Alternatively, a moulded plastic as for example by injection moulding or extrusion can cover one or more of the strength members 27.

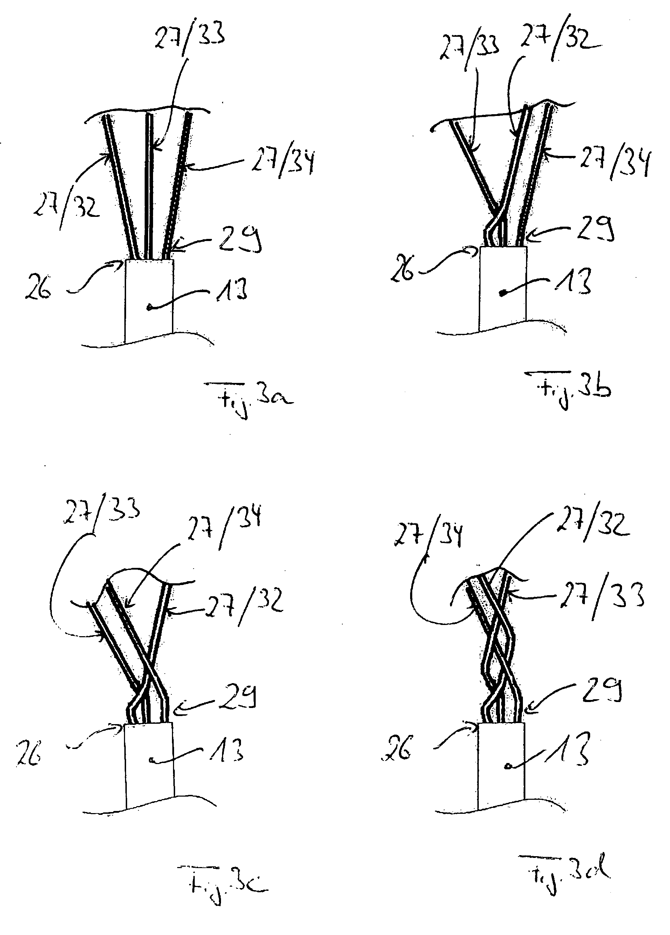

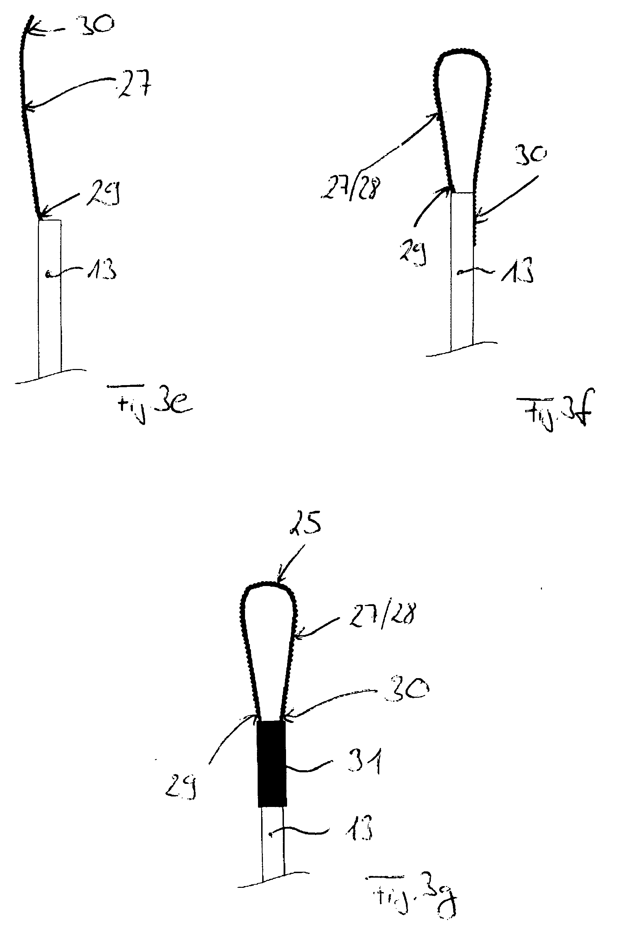

In order to form the loop 28 of the strength members 27 for providing the pulling member 25, the strength members 27 protruding the cable jacket 13 are split up into at least three groups 32, 33 and 34 of strength members 27, whereby said groups 32, 33 and 34 of strength members 27 are according to figures 3a to 3d interweaved thereby forming twisted strength members 27 according to figure 3e.

After the strength members 27 are interweaved the second end 30 of the twisted strength members 27 is according to figure 3f attached to the cable jacket 13 of the riser cable 11 forming the loop 28.

Finally the heat shrink element 31 or moulded plastic is according to figure 3g used to secure the twisted strength members 27 at the riser cable 11 thereby providing the twisted pulling member 25.

In order to form the loop 28 from the strength members 27 of the riser cable 11 it is also possible to cut the cable jacket 13, the optical fibers of said riser cable 11 and the strength members 27 at the end 26 of the riser cable 11, wherein the cut ends of the cable jacket 13 and of the optical fibers are removed, and wherein the cut ends of said strength members 27 form the loop 28 in a way that the first end 29 of the loop 28 and the second end 30 of the loop 28 are both formed by end sections of the cut strength members 27, and that the first end 29 and the second end 30 of the loop 28 are both attached to the cable jacket 13 of the riser cable 11.

The strength members 27 are preferably made from Kevlar strands. However, the pulling member 25 can be used in connection with cables having any type of strength members.

The pulling member 25 relates mainly to indoor fiber optic cables like the preassembled optical cable according to the embodiment of figure 1. However, the pulling member 25 can be used also in other types of cables like copper cables, fiber optic cables or hybrid cables for indoor and outdoor applications.

The pulling member allows an easy installation of the cable and provides a flexible, robust pulling member. All cable dimensions including the dimension of pulling member are kept as small as possible.

The pulling member allows making a pulling member on one end of the cable using strength members of the cable.

The pulling member allows easy pulling of cables through very small ducts. It can hold pulling force over 500N.

The pulling member is flexible, small and easy to attach to installation equipment. The pulling member can be easily attached to any installation equipment. The pulling member can be used for an installation by hand not using additional installation equipment.

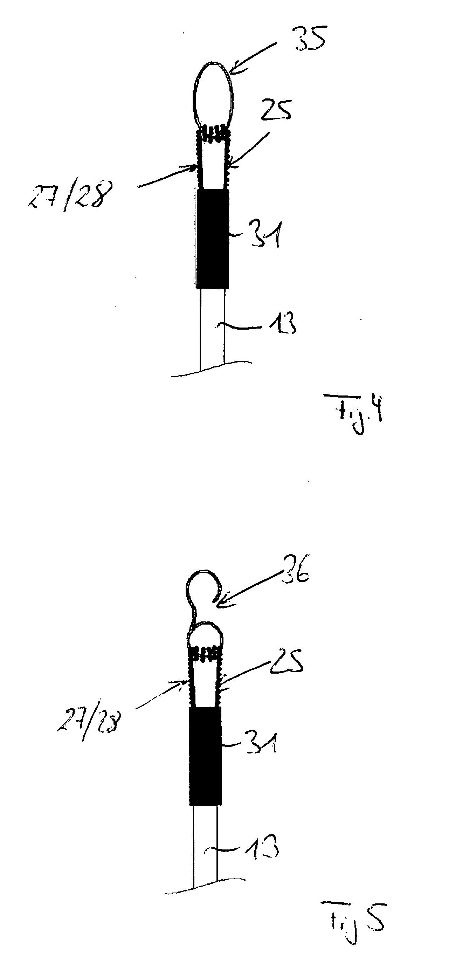

The pulling member uses existing strength members of the cable, therefore it's very strong and it's not necessary to use any other parts. However if needed, any other parts as rings 35 (see figure 4), hooks 36 (see figure 5), etc. any type of material can be easily attached.

### List of reference numerals

- 10: preassembled optical cable
- 11: riser cable
- 12: tether cable
- 13: cable jacket
- 14: furcation adapter
- 15: first end
- 16: individual optical fiber
- 17: individual protection tube
- 18: fiber optic connector
- 19: mid span access location
- 20: protection tube
- 21: furcation adapter
- 22: individual optical fiber
- 23: individual protection tube
- 24: fiber optic connector
- 25: pulling member
- 26: second end
- 27: strength members
- 28: loop
- 29: first end
- 30: second end
- 31: heat shrink or moulded plastic element
- 32: group of strength members
- 33: group of strength members
- 34: group of strength members
- 35: ring
- 36: hook

## Claims

1. Cable, especially optical cable, comprising
a cable jacket (13) surrounding a plurality of data transmission elements, especially a plurality of optical fibers;
strength members (27) releasing the data transmission elements from mechanical stress during installation and/or operation of the cable;
a pulling member (25) for pulling the cable through a cable duct during installation of the cable;
**characterised in that**
said pulling member (25) is an integral element of the cable.

2. The cable as claimed in claim 1, **characterised in that** said pulling member (27) is made from the strength members (27) of the cable.

3. The cable as claimed in claim 1 or 2, **characterised in that** a loop (28) made from the strength members (27) of the cable provides the pulling member (25).

4. The cable as claimed in claim 3, **characterised in that** the cable jacket (13) and preferably the data transmission elements are cut at an end (26) of the cable and removed from the cable thereby providing strength members (27) protruding the cable jacket (13) and preferably protruding the data transmission elements, wherein the free length of said strength members (27) protruding the cable jacket (13) provides the loop (28) in a way that a first end (29) of the loop (28) is formed by a middle section of the strength members (27), that a second end (30) of the loop (28) is formed by an end section of the strength members (27), and that the second end (30) of the loop (28) is attached to the cable jacket (13).

5. The cable as claimed in claim 3, **characterised in that** the cable jacket, the data transmission elements and the strength members are all cut at an end of the cable, wherein the cut ends of the cable jacket and of the data transmission elements are removed, and wherein the cut ends of said strength members provide the loop in a way that a first end of the loop and a second end of the loop are both formed by end sections of the cut strength members, and that the first end and the second end of the loop are both attached to the cable jacket.

6. The cable as claimed in claim 4 or 5, **characterised in that** both ends of the loop (28) providing the pulling member and a portion of the cable jacket (13) to which the or each end section of the strength members (27) is attached are surrounded by a heat shrink or moulded plastic element (31).

7. The cable as claimed in one of claims 2 to 6, **characterised in that** the strength members (27) providing the pulling member (25) are split up into at least three groups, whereby said groups of strength members are interweaved thereby forming a twisted pulling member (25).

8. The cable as claimed in one of claims 1 to 7, **characterised in that** said cable is a optical cable comprising a riser cable (11) and at least one tether cable (12) branched off from said riser cable, wherein:
said riser cable (11) comprises a cable jacket (13) surrounding a plurality of optical fiber bundles, wherein each of said optical fiber bundles comprises a buffer tube surrounding a plurality of individual optical fibers;
said riser cable (11) further comprises mid span access locations (19), wherein in the region of at least one of these mid span access locations (19) at least one tether cable (20) is branched off from said riser cable (11); and
said pulling member (25) is an integral element of the said riser cable (11).

9. The cable as claimed in claim 8, **characterised in that** said pulling member (25) is formed at one end (26) of the said riser cable (11).

10. A method for manufacturing a cable as claimed in one of claims 1 to 9, the method comprising the steps of:
providing a cable comprising a cable jacket surrounding a plurality of data transmission elements and further comprising strength members releasing the data transmission elements from mechanical stress during installation and/or operation of the cable;
removing the cable jacket at an end of said cable; and
forming a pulling member from the strength members of the cable thereby providing a pulling member being an integral element of the cable.

11. The method as claimed in claim 10, wherein the step of removing the cable jacket comprises the step of cutting the cable jacket and the step of cutting the data transmission elements but not cutting the strength members, the step of removing the cut section of cable jacket and the cut sections of data transmission elements from the said cable and thereby providing strength members protruding from the cable jacket and the data transmission elements.

12. The method as claimed in claim 10 or 11, wherein the step of forming the pulling member comprises the step of forming a loop from the strength members protruding from the cable jacket and the data transmission elements and securing the loop at a portion of the cable jacket.

13. The method as claimed in claim 12, wherein the step of forming the loop comprises the step of splitting up the strength members protruding the cable jacket into at least three groups, and the step of interweaving said groups of strength members thereby forming a twisted loop which provides the pulling member.
